# EUROPEAN PATENT APPLICATION

(11) **EP 1 231 418 A2**
(43) Date of publication of application: **14.08.2002**
(21) Application number: 02003067.2
(22) Date of filing: 12.02.2002
(51) Int. Cl.: F16J 15/32

(54) **Composite elastomer/PTFE seal, in particular for insertion between relatively rotating members subject to oscillation**

(30) Priority: 13.02.2001 IT MI010289
(71) Applicant: RFT S.p.A., 10121 Torino (IT)
(72) Inventor: Satta, Marco, 10025 Pino Torinese (IT)
(74) Representative: Plebani, Rinaldo

(57) **Abstract**

A composite seal (1) insertable between two relatively rotating members (2, 3), and including a substantially rigid support (6) for connection to a first of the members, and a flexible sliding sealing element (8) carried integrally by the support (6) and made of a non-elastomeric, synthetic plastic resin, preferably PTFE or similar; the flexible sealing element (8) has at least one annular lip (10) substantially in the form of a cylindrical sleeve and defined by a first lateral surface (18) forming a sliding seal on a corresponding sealing surface (11) of a second of the members; and an annular pressure element (21), made of an elastomer, is carried integrally by the annular lip (10) on a second lateral surface (20), opposite the first, of the annular lip, and itself supports a toroidal spring (22) inserted in an annular seat (23) formed in the annular pressure element (21), on the opposite side to the annular lip (10).

## Description

The present invention relates to a composite seal made partly of an elastomer and partly of a non-elastomeric, low-friction synthetic plastic resin of good chemical/mechanical and heat resistance, such as PTFE (polytetrafluoroethylene) or any other synthetic plastic resin of similar characteristics. More specifically, the seal according to the invention is designed for insertion between relatively rotating members subject to in-service oscillation, such as mechanical members of automotive transmissions, e.g. differentials, gear box axles, bevel pinions, etc.

Such applications have always employed conventional seals, i.e. comprising a sealing member made of elastomeric material and supported by and fixed integrally to a substantially rigid, normally metal, supporting member. Whereas the supporting member provides for assembling the seal integrally to a first of the two mechanical members for sealing, the elastomeric sealing member has a flexible lip which, in use, forms a sliding seal on the other mechanical member, normally the "movable" one, such as a rotating shaft. The lip, which may be combined with other auxiliary lips, is preferably spring-loaded to increase the radial sliding pressure exerted by the lip on the movable member, and consequently improve sealing performance to prevent fluid entering or leaking from the chamber defined, in use, between the two mechanical members, and which normally houses delicate component parts, such as rolling bearings and gears.

The supporting and sealing members are connected mechanically by bonding at the curing stage, using a known process which comprises coating the metal supporting member with an adhesion promoter or "primer", i.e. a synthetic glue with an affinity for sulfur; and then compression or injection molding the elastomeric sealing member on to the coated supporting member, so that, once the curing process is completed, the sealing member is connected mechanically by chemical bonds to the supporting member.

Conventional seals of the type described, however, have several drawbacks. In particular, severe friction is produced at the sealing region by the elastomeric lip sliding on the mechanical member, and by the high contact pressure with which the lip cooperates with the mechanical member as a result of the spring. In addition to dissipating and so wasting a large amount of energy - which, in the case of vehicles, may result in high fuel consumption - such friction results in severe heating of the sealing lip, which may result in rapid wear of the elastomeric sealing member, thus impairing sealing performance, so that frequent servicing is required to check/replace the worn seals.

By way of a solution to the problem, in many applications, the elastomeric sealing member is replaced with one made of non-elastomeric, low-friction, synthetic plastic resin, such as PTFE. This, too, however, is not without several drawbacks. In particular, PTFE adheres poorly, so that the sealing member must usually be secured mechanically. But, more importantly, the sealing member is totally incapable of "following" the relative movement of the mechanical member with which it cooperates in sliding manner. Since, in applications of the type described above, in which the mechanical members between which the seal is inserted are subject to frequent, even severe, oscillation, this would result in an unacceptable reduction in sealing performance, seals with PTFE sealing members cannot be used for transmission members.

It is an object of the present invention to eliminate the aforementioned drawbacks by providing a seal which ensures excellent sealing, even in the presence of severe oscillation of the mechanical members between which it is inserted, and which, at the same time, produces very little friction or heat.

According to the present invention, there is provided a composite seal insertable between two relatively rotating members to seal in fluidtight manner a cavity defined between said members; the seal comprising a substantially rigid support for connection to a first of said members, and a flexible sealing element carried integrally by said support and comprising at least one annular sealing lip cooperating in sliding contact with a sealing surface of a second of said members; said flexible sealing element being made of a non-elastomeric, synthetic plastic resin; characterized in that said annular sealing lip of the flexible sealing element is substantially in the form of a cylindrical sleeve defined by a first lateral surface cooperating, in use, with said sealing surface of said second member, and by a second lateral surface opposite the first and facing, in use, said first member; and by also comprising, in combination, an annular pressure element made of an elastomer and carried integrally by said annular sealing lip on said second lateral surface of the annular sealing lip; and a radial toroidal pressure spring carried by said elastomeric annular pressure element and inserted in an annular seat formed in the elastomeric annular pressure element, on the opposite side to said annular sealing lip.

Preferably, said flexible sealing element and said annular sealing lip are formed integrally in one piece, and are made of polytetrafluoroethylene (PTFE) or any other synthetic plastic resin of similar physical-chemical characteristics.

The annular sealing lip thus provides for effective sealing - mainly due to the high radial sliding pressure imparted by the spring - but with very little friction, thus saving energy and greatly reducing heating and wear. Moreover, by virtue of the combined action of the spring and the elastomeric element interposed, according to the invention, between the PTFE lip and the spring, the sealing lip follows closely any relative oscillation of the mechanical members between which the seal is inserted, thus ensuring perfect sealing at all times.

The above results are achieved, surprisingly, by the PTFE sealing lip and the elastomeric annular "add-on" supporting the spring being mechanically connected perfectly using the same system traditionally used to ensure adhesion of the elastomeric part to the metal supporting member of conventional seals, i.e. bonding at the curing stage.

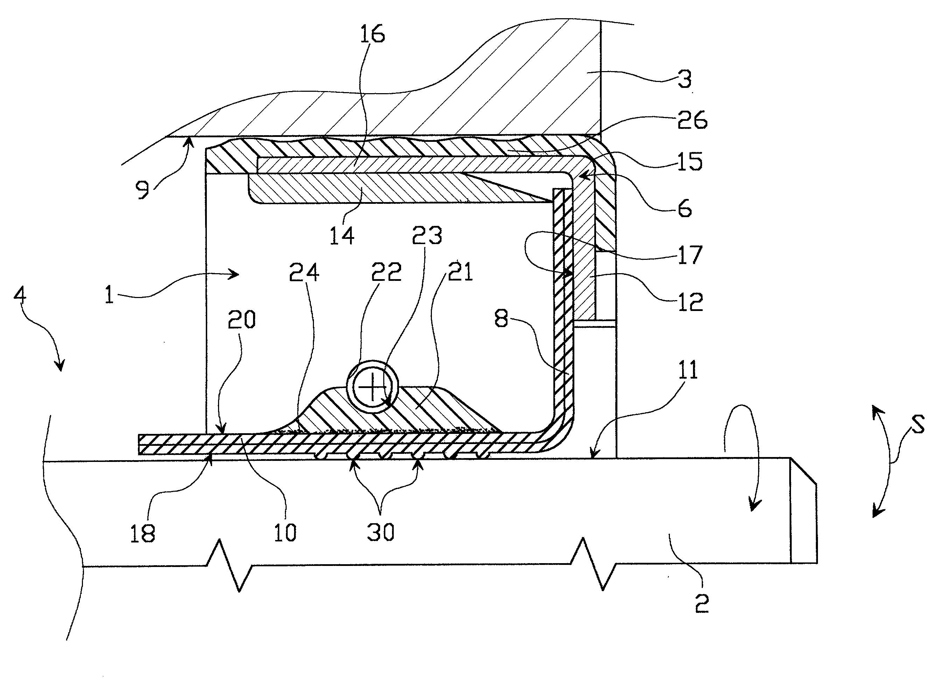

A non-limiting embodiment of the present invention will be described by way of example with reference to the accompanying drawing showing a radial section of a seal in accordance with the teachings of the invention and inserted between two mechanical members in relative motion.

Number 1 in the accompanying drawing indicates as a whole a composite seal insertable between two relatively rotating members 2 and 3 to seal in fluidtight manner a cavity 4 defined between members 2 and 3. In the schematic, non-limiting example shown, members 2 and 3 are defined respectively by a rotary shaft subject to oscillations S as indicated by the arrows, and by the seat housing the shaft and which internally defines cavity 4. The purpose of seal 1 is to keep any external contaminants, such as water, dust, etc., out of cavity 4, and to prevent leakage from cavity 4 of any operating fluids or, more simply, lubricating grease.

Seal 1 comprises a known substantially rigid support 6 preferably made of sheet metal coined to the desired shape; and a substantially known flexible sealing element 8 carried integrally by support 6. Support 6 performs the dual function of securing seal 1 angularly integral with member 3, inside a sealing seat 9, and supporting flexible sealing element 8 in the work position.

Flexible sealing element 8 comprises at least one annular sealing lip 10 cooperating, in use, in sliding contact with a sealing surface 11 of member 2 in known manner. Annular lip 10 and flexible sealing element 8 are formed in one piece from non-elastomeric synthetic plastic resin, and more specifically are formed integrally from polytetrafluoroethylene (PTFE) or any other synthetic plastic resin of similar physical-chemical characteristics to those of PTFE, i.e. low sliding friction and good mechanical, chemical and heat resistance.

In the non-limiting example shown schematically in the drawing, flexible sealing element 8 is fitted axially and angularly integral with support 6 in conventional manner, i.e. is gripped mechanically between two rigid, adjacent clamping portions 12 and 14 of support 6.

More specifically, support 6 has a substantially L-shaped radial section, and is defined by the interference fit of an L-shaped supporting element 15 and portion 14, which is in the form of a sleeve independent of element 15 and interference fitted inside a corresponding sleeve-shaped portion 16 of element 15, so as to rest axially, with the interposition of sealing element 8, against a stop surface 17 of support 6 defined by portion 12, which is in the form of a flange portion of element 15, substantially perpendicular to sleeve-shaped portion 16. In actual use, sleeve-shaped portion 16 and the clamping portion defined by sleeve 14 are substantially coaxial with the movable member 2.

In a variation not shown for the sake of simplicity, portion 14 may obviously be formed in one piece with element 15, e.g. as an extension, bent 180°, of portion 16.

According to the invention, annular sealing lip 10 of flexible sealing element 8 is substantially in the form of a cylindrical sleeve substantially coaxial with sleeve-shaped portions 14 and 16 of support 6, and defined by a first lateral surface 18 cooperating, in use, with sealing surface 11 of member 2, and by a second lateral surface 20 opposite first lateral surface 18 and facing member 3 in use. In combination with the above characteristic, seal 1 also comprises an annular pressure element 21 made of elastomeric material (e.g. synthetic rubber, with or without filler) and which is angularly and axially integral with lateral surface 20 of sealing lip 10. Seal 1 according to the invention also comprises a radial toroidal pressure spring 22 carried by elastomeric element 21 and inserted in an annular seat 23 formed in elastomeric element 21, on the opposite side to annular lip 10, by appropriately shaping elastomeric element 21.

Elastomeric element 21 and annular sealing lip 10 - which, as seen, are made of materials considered chemically incompatible, such as rubber and PTFE - are connected mechanically, according to the invention, by chemical bonding. More specifically, element 21 is glued, at the curing stage, to lateral surface 20 of lip 10 by first depositing on surface 20 a layer 24 (shown schematically and not to scale in the drawing by the dotted area) of an adhesion promoter or "primer" of the same type used to cure rubber on metal; then forming element 21 directly on surface 20 using a "green" mix (i.e. not yet cured); and then curing the whole.

Preferably, support 6 is at least partly embedded in a known static elastomeric sealing element 26 glued, at the curing stage, to support 6, and which, in use, cooperates in fluidtight manner with seat 9. In this case, according to a variation not shown, and made possible by the process used to secure element 21 to lip 10, annular elastomeric pressure element 21 may be formed in one piece with static elastomeric sealing element 26 by means of an appropriate extension of element 26, shaped so that at least part of flexible sealing element 8 is embedded in element 26 and gripped between element 26 and stop surface 17. This can be done easily, for example, by replacing portion 14 of the support with said extension of elastomeric element 26, and continuing the extension along, and secured to, element 8 to connect up with elastomeric element 21.

To improve the dynamic sealing action of lip 10, lateral surface 18 of lip 10 is preferably provided with ribs or spiral ridges 30 (shown out of scale in the drawing, purely by way of example) facing sealing surface 11 of member 2 in use.

Finally, to ensure correct, easy assembly of seal 1, sleeve-shaped annular sealing lip 10 of flexible sealing element 8 is formed to extend axially, on the opposite side to flange portion 12 of support 6, to a length greater than the axial extension of sleeve-shaped portion 16 of support 6.

## Claims

1. A composite seal (1) insertable between two relatively rotating members (2, 3) to seal in fluidtight manner a cavity (4) defined between said members; the seal comprising a substantially rigid support (6) for connection to a first (3) of said members, and a flexible sealing element (8) carried integrally by said support (6) and comprising at least one annular sealing lip (10) cooperating in sliding contact with a sealing surface (11) of a second (2) of said members; said flexible sealing element (8) being made of a non-elastomeric, synthetic plastic resin; **characterized in that** said annular sealing lip (10) of the flexible sealing element (8) is substantially in the form of a cylindrical sleeve defined by a first lateral surface (18) cooperating, in use, with said sealing surface (11) of said second member (2), and by a second lateral surface (20) opposite the first and facing, in use, said first member (3); and by also comprising, in combination, an annular pressure element (21) made of an elastomer and carried integrally by said annular sealing lip (10) on said second lateral surface (20) of the annular sealing lip; and a radial toroidal pressure spring (22) carried by said elastomeric annular pressure element (21) and inserted in an annular seat (23) formed in the elastomeric annular pressure element (21), on the opposite side to said annular sealing lip (10).

2. A composite seal (1) as claimed in Claim 1, **characterized in that** said flexible sealing element (8) and said annular sealing lip (10) are formed integrally in one piece, and are made of polytetrafluoroethylene (PTFE) or any other synthetic plastic resin of physical-chemical characteristics similar to those of PTFE.

3. A composite seal (1) as claimed in Claim 1 or 2, **characterized in that** said elastomeric annular pressure element (21) is connected mechanically, by chemical bonding, to said annular sealing lip (10) of said flexible sealing element (8) made of non-elastomeric synthetic plastic resin.

4. A composite seal (1) as claimed in Claim 3, **characterized in that** said elastomeric annular pressure element (21) is glued, at the curing stage, to said second lateral surface (20) of said annular sealing lip (10) of said flexible sealing element (8) made of non-elastomeric synthetic plastic resin.

5. A composite seal (1) as claimed in Claim 3 or 4, **characterized in that** said support (6) is at least partly embedded in a static elastomeric sealing element (26) glued, at the curing stage, to said support (6).

6. A composite seal (1) as claimed in Claim 5, **characterized in that** said elastomeric annular pressure element (21) is formed in one piece with said static elastomeric sealing element (26); and **in that** said static elastomeric sealing element is so formed that at least part of said flexible sealing element (8) made of non-elastomeric synthetic plastic resin is embedded in said static elastomeric sealing element and gripped against a stop surface (17) of said support (6).

7. A composite seal (1) as claimed in any one of Claims 1 to 5, **characterized in that** said flexible sealing element (8) made of non-elastomeric synthetic plastic resin is connected mechanically to said support (6) and gripped between two adjacent rigid portions (12, 14) of the support.

8. A composite seal (1) as claimed in any one of the foregoing Claims, **characterized in that** said first lateral surface (18) of the annular sealing lip (10) is provided with ribs or spiral ridges (30) facing said sealing surface (11) of the second member (2) in use.

9. A composite seal (1) as claimed in any one of the foregoing Claims, **characterized in that** said support (6), in radial section, is substantially L-shaped, and comprises a flange portion (12), and a sleeve-shaped portion (16) substantially coaxial with the sleeve-shaped said annular sealing lip (10); the annular sealing lip extending axially, on the opposite side to said flange portion (12) of the support (6), to a length greater than the axial extension of said sleeve-shaped portion (16) of said support (6).
